Europäisches Patentamt

European Patent Office

Office européen des brevets

(19)

(11) Veröffentlichungsnummer: **0 005 199**
**B1**

(12) **EUROPÄISCHE PATENTSCHRIFT**

(45) Veröffentlichungstag der Patentschrift:
**23.03.83**

(21) Anmeldenummer: **79101147.1**

(22) Anmeldetag: **25.04.79**

(51) Int. Cl.³: **C 22 C 38/12,** C 22 C 38/16,
B 23 K 35/30

(54) **Manganstahl sowie Verfahren zum Schweissen dieses Manganstahles.**

(30) Priorität: **02.05.78 DE 2819227**

(43) Veröffentlichungstag der Anmeldung:
**14.11.79 Patentblatt 79/23**

(45) Bekanntmachung des Hinweises auf die Patenterteilung:
**23.03.83 Patentblatt 83/12**

(84) Benannte Vertragsstaaten:
**FR GB NL SE**

(56) Entgegenhaltungen:
**DE-A-2 063 451        FR-A-2 272 786**
**DE-A-2 139 934        GB-A-974 028**
**DE-A-2 239 092        GB-A-1 083 466**
**DE-A-2 517 164        GB-A-1 195 002**
**DE-A-2 553 349        GB-A-1 337 820**
**FR-A-1 585 316        US-A-4 065 331**
**FR-A-2 046 713        US-A-4 080 225**
**FR-A-2 184 761**

**Die Akte enthält technische Angaben, die nach dem
Eingang der Anmeldung eingereicht wurden und die
nicht in dieser Patentschrift enthalten sind.**

(73) Patentinhaber: **Stahlwerke Peine-Salzgitter AG,
Gerhardstrasse 10, D-3150 Peine (DE)**

(72) Erfinder: **Vlad, Constantin M., Dr.-Ing., Im kleinen Lah 8,
D-3321 Nordassel (DE)**
Erfinder: **Schreiber, Kamillo, Haeckelstrasse 12,
D-3300 Braunschweig (DE)**

(74) Vertreter: **Gramm, Werner, Dipl.-Ing. et al,
Patentanwälte Gramm + Lins Theodor-Heuss-Strasse 2,
D-3300 Braunschweig (DE)**

BUNDESDRUCKEREI BERLIN

## Manganstahl sowie Verfahren zum Schweißen dieses Manganstahles

Die Erfindung betrifft einen Manganstahl sowie ein Verfahren zum Schweißen dieses Manganstahles.

Seit einigen Jahren ist man bestrebt, die Verbrennung von Gasen bei höheren Temperaturen durchzuführen, um so eine vollständige Verbrennung zu gewährleisten. Dies hat jedoch in der Praxis häufig zu einer interkristallinen Spannungsrißkorrosion in den Stahlteilen der Verbrennungsanlagen geführt. Es ist zwar bekannt, daß die interkristalline Spannungsrißkorrosion normaler Kohlenstoffstähle ein unter Einfluß von Zugspannungen ablaufender elektrochemischer Lokalkorrosionsvorgang entlang den Korngrenzen ist, dessen Zustandekommen von drei Faktoren abhängig ist, nämlich von dem spezifisch wirkenden Angriffsmittel, von der spezifischen Empfindlichkeit des Stahles gegenüber dem Korrosionsmittel und von den einwirkenden Zugspannungen. Wird z. B. Methangas verbrannt, bilden sich in großen Mengen Stickoxide, Ammoniak und Wasserdampf, die dann als Angriffsmittel bei der interkristallinen Spannungsrißkorrosion (ISRK) wirken. Der Mechanismus der Rißentstehung im Stahl durch ISRK ist noch nicht geklärt.

Da eine auch nur halbwegs verläßliche Abschätzung der Standzeit des Stahls im voraus wegen der Höhe und Art der Eigenspannungen, die durch Schweiß- und Bearbeitungsvorgänge anstehen, nicht möglich ist, hat man versucht, die Beständigkeit dieser Kohlenstoffstähle beim Einsatz in Spannungskorrosion erzeugenden Medien entweder durch Zugabe von Inhibitormedienzusätze wie $KMnO_4-$, $PbO-$, $ZnO-$ etc. oder durch Legieren des Stahls mit Chrom (6 bis 19%) und Aluminium (0,5 bis 1,2%) zu erhöhen.

Es wurde jedoch festgestellt, daß Spannungsrißkorrosion durch die Zugabe von $KMnO_4$-, PbO- oder ZnO-Zusätze nur in Alkalimedien gelegentlich verhindert werden kann, wobei der Erfolg dieser Schutzmaßnahme von der angewandten Konzentration abhängig ist; bei ungenügender Zugabe führt diese sogar zu einer Steigerung der Spannungsrißkorrosion.

Andererseits ist es in der Regel außerordentlich teuer und unwirtschaftlich, ganze Verbrennungsanlagen wie z. B. Cowper oder Heißwinderhitzer aus rostfreien Stählen wie X 10 CrAl 7 (0,5/1,0% Al, 6,0/7,0% Cr), X 10 CrAl 13 (0,7/1,2% Al und 12/14% Cr) oder X 10 CrAl 18 (0,7/1,2% Al und 7/9% Cr) herzustellen. Ein weiterer Nachteil dieser Stähle liegt bei ihrer Verarbeitung darin, daß sie Kaltformgebungsarbeiten nur nach einem Vorwärmen auf Temperaturen von 300°C zulassen und nach starker Kaltverformung eine Wärmebehandlung bei Temperaturen oberhalb 750°C mit anschließender schnellen Luftabkühlung benötigen.

Solche Wärmebehandlungen führen jedoch nicht nur zu Verformungen und Abweichungen von der Maßhaltigkeit, sondern lassen sich auch kaum in vernünftiger Weise an größeren Anlagen durchführen. Aus diesen Gründen sind zum Einsatz in solchen Atmosphären Stähle entwickelt und auf den Markt gebracht worden wie H IV L und HSB 50 SL, die billiger sind als die Stähle X 10 CrAl 7, X 10 CrAl 13 oder X 10 CrAl 18. Nachteilig ist jedoch bei den Stählen H IV L bzw. HSB 50 SL, bei denen die Cr-Gehalte auf 0,3% und Al-Gehalte auf mindestens 0,03% begrenzt sind, die Notwendigkeit eines Anlassens bei 750°C mit anschließendem Luftabkühlen nach jedem Schweiß- bzw. Kaltverformungsvorgang, wenn eine erhöhte Beständigkeit gegen interkristalline Spannungskorrosion gewährleistet werden muß.

Weiterhin hat es sich gezeigt, daß die Spannungsverteilung im Stahl unter Last durch Strukturinhomogenitäten im mikroskopischen Bereich beeinflußt wird. Insbesondere erzeugen die oxidischen und sulfidischen Einschlüsse ein Feld verstärkter Spannungen um sich herum: Je größer die Abmessung des Einschlusses und je höher die Festigkeit des Gefüges, desto größer ist die Spannungskonzentration.

Da die Verbrennungsanlage oder die Stahlkonstruktionen neben den alkalischen und neutralen auch schwach sauren Lösungen ausgesetzt werden, entsteht bei deren Reaktion mit dem Stahl auch Wasserstoff in atomarer Form. Die Verteilung des in den Stahl eindringenden Wasserstoffs hängt jedoch von der lokalen Spannungskonzentration ab, was dazu führt, daß der Wasserstoff sich um die Einschlüsse im Gefüge sammelt. Dies wiederum führt zu steilen lokalen Wasserstoffkonzentrationsgradienten, besonders in der Wärmeeinflußzone der Schweißnaht, wodurch Brüche entstehen. Es besteht somit ein Bedarf nicht nur nach Stählen mit einer erhöhten Beständigkeit gegen ISRK, sondern auch nach Stählen, die gleichzeitig besser zur Verwendung in hydrierender Umgebung, nämlich in schwach sauren Lösungen, geeignet sind.

Ausgehend von diesen Erkenntnissen liegt der Erfindung die Aufgabe zugrunde, einen Stahl zu schaffen, der eine erhöhte Beständigkeit gegen interkristalline Spannungsrißkorrosion und Wasserstoffversprödung besitzt und daher zur Herstellung z. B. von Cowper-Anlagen, Behältern, Druckgefäßen, Hochdruckrohrleitungen, Silos für die Erzeugung von Kunstdünger und ähnlichen Konstruktionen, die Stickoxiden, Nitraten oder alkalischen Medien in fester, flüssiger, gasförmiger oder dampfförmiger Phase ausgesetzt sind, verwendet werden kann.

Diese Aufgabe wird gemäß der Erfindung gelöst durch einen Manganstahl in einer Zusammensetzung von

0,06—0,18% Kohlenstoff
0,10—1,80% Silizium
0,30—1,70% Mangan
0,02—0,70% lösliches Aluminium
0,01—0,06% Niob
0,02—0,14% Phosphor
0,008—0,020% Schwefel
0,15% oder höher Kupfergehalt
ggf. 0,03—0,20% Titan
ggf. bis maximal 1,0% Nickel
ggf. 0,05—0,60% Chrom als Legierungselemente
Rest Eisen

im normal geglühten Zustand als Werkstoff für Bauteile, die alkalischen, neutralen oder schwach sauren Lösungen ausgesetzt sind, insbesondere für Heißwinderhitzer.

Bei diesem erfindungsgemäßen Manganstahl können auch 0,004—0,020% Phosphor und 0,002—0,007% Schwefel vorgesehen werden, wenn gleichzeitig ein niedrigerer Kupfergehalt von 0,03—0,05% vorgesehen wird.

Zu den erfindungsgemäßen Grenzen der Legierungsanteile ist folgendes festzustellen:

Die obere Grenze des Kohlenstoffgehaltes liegt bei 0,18%, da sich ein Kohlenstoffgehalt von über 0,20% ungünstig auf die Schweißeignung des Werkstoffes auswirkt, wenngleich Kohlenstoffgehalte über 0,20% die Beständigkeit gegen ISRK erhöhen. Die untere Grenze des Kohlenstoffgehaltes liegt bei 0,06%, da bei geringeren Anteilen die Neigung zur Spannungsrißkorrosion stark zunimmt.

Silizium wird aus Gründen der Desoxidation und zur Verbesserung der Festigkeit sowie zur Erhöhung der ISRK-Beständigkeit bei hohen Beanspruchungen zugegeben. Bei einem Siliziumgehalt von weniger als 0,10% können die gewünschten Wirkungen nicht mehr erzielt werden, während bei einem Siliziumgehalt von über 0,50% die Kerbschlagzähigkeit des Stahls spürbar abnimmt.

Mangan wird aus Gründen der Desoxidationswirkung und zur Verbesserung der Festigkeit und Kornfeinung sowie der Schweißbarkeit zugegeben. Bei Mangangehalten unter 0,90% lassen sich die gewünschten Effekte kaum erzielen. Dagegen besteht bei Manganzusätzen in Mengen von über 1,70% die Gefahr, daß der Stahl auch bei langsamen Abkühlungsgeschwindigkeiten von der Warmwalz- bzw. Normalglühtemperatur eine martensitische Umwandlung erfährt und dadurch seine Beständigkeit gegen ISRK verschlechtert wird.

Schwefel und Phosphor, die als unvermeidbare Verunreinigungen bei der Stahlherstellung zu betrachten sind, sind je auf eine obere Konzentrationsgrenze von 0,020% bzw. 0,14% festgelegt, wenn die Kupfergehalte um 0,15% oder höher liegen. Bei entsprechend niedrigeren Kupfergehalten von 0,03 bis 0,05% werden die Schwefelgehalte auf 0,002 bis 0,007% beschränkt, um interkristalline wasserstoffinduzierte Risse zu vermeiden.

Lösliches Aluminium, das ein wesentliches Element zur Verhinderung der interkristallinen Spannungsrißkorrosion ist, wirkt sich besonders dann synergetisch gegen ISRK aus, wenn es zusammen mit Niob- bzw. Titanzusätzen wegen des kornverfeinernden Effektes dem Stahl zugegeben wird. Dadurch wird der Widerstand gegen ISRK zusätzlich erhöht, so daß dieser weniger von der aufgebrachten Belastung abhängt, als dies bei konventionellen Kohlenstoffstählen der Fall ist. Es zeigt sich, daß Aluminiumzugaben in Mengen von weniger als 0,02% die interkristalline Spannungsrißkorrosion nicht unterbinden kann und zwar auch dann nicht, wenn Niob- und Titanzusätze dem Stahl über die angegebenen Mengen hinaus zulegiert wird. Aluminiumzusätze von über 0,70% führen andererseits zu einer Beeinträchtigung der Schweißbarkeit.

Durch den Zusatz von Chrom in Höhe von 0,05 bis 0,60% wird die Bildung einer Passivierungsschicht gefördert, die besonders die Beständigkeit gegen ISRK in Alkalimedien erhöht. Dagegen wird die Beständigkeit des Stahls gegen interkristalline Spannungsrißkorrosion in Gegenwart von Chrom in Mengen von über 0,60% erheblich beeinträchtigt.

Tabelle 1 zeigt erfindungsgemäße Stahlsorten A bis H, von denen die Stahlsorten A und B aus den vorstehend näher erläuterten Gründen im Sinne der Erfindung keine optimalen Lösungen darstellen.

Die Beständigkeit in Nitrat- bzw. Alkalimedien wurde für die Stahlsorten A bis H nach DIN 50515 gemessen; die Werte sind in Tabelle 2 eingetragen.

Die Beständigkeit gegen wasserstoffinduzierte interkristalline Spannungsrisse wurde metallographisch ermittelt, nachdem die Stähle einer mit $H_2S$ gesättigten chloridhaltigen Lösung nach ASTM D 1141-52 für 96 Stunden ausgesetzt worden sind. Ebenso sind die in der Tabelle 2 genannten Daten für interkristalline Angriffe nach DIN 50 915 aus beschleunigten Versuchen abgeleitet, die in einer 60%igen siedenden Calcium-Ammonnitrat-Lösung durchgeführt wurden.

Beide Lösungen sind bekanntlich extrem günstig zur Erzeugung beschleunigter simulierter Bedingungen unter denen die Stähle in Praxis verwendet werden.

Ein Manganstahl gemäß der Erfindung ist somit durch folgende mechanisch-technologische Eigenschaften gekennzeichnet:

320—440 N/mm²     Streckgrenze
440—610 N/mm²     Zugfestigkeit
22— 38%     Bruchdehnung (in Längs- und Querrichtung).

Dieser Manganstahl weist vorzugsweise CVN-$a_k$-Werte von 80 bis 190 J/cm² in Längs- und 55 bis 85 J/cm² in Querrichtung bei $\pm 0°$ C und einem maximalen Wasserstoffgehalt von 1,65 cm³/100 g nach einer 96stündigen Behandlung in einer mit $H_2S$ gesättigten Lösung auf. Er kann aber auch CVN-$a_k$-Werte von 360 bis 390 J/cm² in Längs- und 300 bis 325 J/cm² in Querrichtung bei $\pm 0°$ C und einem maximalen Wasserstoffgehalt von 0,15 cm³ $H_2$/100 g nach einer 96stündigen Behandlung in einer mit $H_2S$ gesättigten Lösung aufweisen.

Die vorstehend genannten Manganstähle sind lediglich als walzbarer Werkstoff, nicht aber als Guß geeignet. Diese Manganstähle weisen einen Mangangehalt von 0,9—1,70% auf.

Die in den Tabellen 1 und 2 aufgeführte Stahlsorte A mit einem Mangananteil von 0,30% und einem Siliziumgehalt von 1,77% ist für Guß geeignet.

Um den Schwefelgehalt von 0,008 bis 0,020 einzustellen, genügt eine übliche, z. B. mit Soda durchgeführte Entschwefelung des Roheisens. Um den für diesen Schwefelgehalt erfindungsgemäß vorgesehenen verhältnismäßig hohen Phosphorgehalt von 0,02—0,14% zu erhalten, wird nach der Entschwefelung nicht soweit heruntergefrischt. Bei dieser Stahlzusammensetzung muß dann erfindungsgemäß Kupfer zulegiert werden (0,15% oder höher Kupfergehalt), wobei bei höheren Kupfergehalten auch ein höherer Phosphorgehalt vorteilhaft ist.

Schwefel verbindet sich mit Mangan zu Mangansulfid, an dem sich Wasserstoff anlagern kann. Dies führt zu den befürchteten interkristallinen Rissen. Um die Bildung von Mangansulfid zu verhindern, zumindest aber stark zu verringern, ist somit ein geringerer Schwefelgehalt, also grundsätzlich die Herstellung eines sauberen Stahls erstrebenswert. Versuche haben ergeben, daß bestimmte Kupfergehalte bei dem späteren Einsatz des Manganstahls Wasserstoffdiffusionen verhindern. Im Gitter bilden sich Einlagerungsmischkristalle, die einen Ansatz von Wasserstoff verhindern. Bei höheren Kupfergehalten ist auch ein höherer Phosphorgehalt vorteilhaft, um die angestrebte Sperrschicht auszubilden.

In der US-A-4 080 225 sind Manganstähle offenbart, die z. B. 0,04—0,12 Kohlenstoff, 0,30—0,90 Mangan, 0,15—0,50 Silizium, 0,15—0,50 Nickel, 0,15—0,40 Kupfer, 0,020—0,090 lösliches Aluminium und 0,060 Niob aufweisen können. Bei den offenbarten Stählen sind Phosphorgehalte von 0,009—0,011, Schwefelgehalte von 0,020—0,021 und Kupfergehalte von 0,11—0,30 vorgesehen. Die für die Vermeidung interkristalliner Risse wesentliche Zuordnung der Komponenten Phosphor, Schwefel und Kupfer entspricht somit nicht den erfindungsgemäßen Vorschlägen. Vergleichsversuche haben gezeigt, daß bei Abweichung von den erfindungsgemäßen Zuordnungen interkristalline, wasserstoffinduzierte Risse auftreten.

Der Manganstahl gemäß der genannten US-Patentschrift soll in erster Linie zur Herstellung von Schotts und Rumpfteilen eines Schiffskörpers, insbesondere bei Flüssiggastankern, verwendet werden. Hingegen soll dieser vorbekannte Manganstahl nicht zur Herstellung der das Flüssiggas aufnehmenden Behälter eingesetzt werden. Bei dem vorbekannten Verwendungszweck würden somit die Manganstähle üblicherweise keinen Stickoxiden, Nitraten oder alkalischen Medien ausgesetzt werden. Hingegen ist wesentlich für den Einsatzbereich der vorbekannten Manganstähle eine ausreichende Festigkeit des Stahles insbesondere in Temperaturbereichen bis $-57°$ C. Demgegenüber liegt bei den erfindungsgemäßen Manganstählen der für das Einsatzgebiet interessante Temperaturbereich bei etwa $+150°$ C.

In der GB-A-974 028 ist ein Verfahren zur Herstellung von hochfesten, niedriglegierten Blechen für den Einsatz bei tiefen Temperaturen bis zu $-60°$ C offenbart. Aus den angegebenen Beispielen sowie den chemischen Zusammensetzungen ist ersichtlich, daß dieser Stahl vorzugsweise für den Einsatz in Bereichen tiefer Temperaturen geeignet ist. Auch hier fehlt die erfindungsgemäße Zuordnung der Komponenten Phosphor, Schwefel und Kupfer.

Die heute bekannten, gegen ISRK beständigen Stähle müssen insbesondere nach fertiggestellter Schweißung zur Aufrechterhaltung ihrer Beständigkeit gegen ISRK einer Schluß-Wärme-Behandlung bei ca. 750° C unterworfen werden. Diese Wärmebehandlung ist jedoch von bestimmten Bauteilgrößen an mangels ausreichend großer Glühöfen nicht mehr realisierbar (z. B. bei Hochofen-Winderhitzern mit etwa 40 m Höhe).

Die erfindungsgemäßen Manganstähle lassen sich im normal geglühten Zustand als Werkstoff insbesondere für solche Bauteile verwenden, die alkalischen, neutralen oder schwach sauren Lösungen ausgesetzt sind, insbesondere für Heißwinderhitzer. Für diese Stähle sollen Schweißverfahren entwickelt werden, die Schlußglühungen nicht mehr erforderlich machen.

Diese Aufgabe wird bei einem Verfahren zum Mehrlagenschweißen eines Manganstahles gemäß der Erfindung dadurch gelöst, daß als Schweißgut der Werkstoff 13 CrMo 44 angewendet und die Schweißlagenaufbautechnik in folgenden Schritten durchgeführt wird:

a)     Zuerst werden auf der den aggressiven Medien ausgesetzten Innenseite des Bauteiles die Wurzellagen geschweißt;

b)  anschließend werden an der Außenseite des Bauteiles Schweißlagen aufgebracht;
c)  die Nahtkanten auf der Innenseite des Bauteiles werden auf etwa 100°C vorgewärmt und mit dünnem Strichlagen-Schweißgut gepuffert;
d)  darauf werden auf der Innenseite die Decklagen so aufgebracht, daß die Schmelzgrenzen der Pufferlagen nicht überschritten werden.

Im Schweißgut wird somit die Beständigkeit gegen ISRK durch Anwendung von 13 CrMo 44-Schweißzusatzwerkstoff erreicht. In den Schweißnahtübergängen wird die Beständigkeit gegen ISRK hingegen nur durch die vorstehend erläuterte besondere Schweißlagenaufbautechnik gewährleistet. Die Decklagen auf der Innenseite des Bauteiles werden als sogenannte Vergütungslagen geschweißt, wobei die Schmelzgrenzen der Pufferlagen nicht mehr überschritten werden dürfen. Dadurch werden nicht nur die Grobkornbereiche der wärmebeeinflußten Zone der vorher gelegten Pufferlagen durch Umwandlung verfeinert, sondern durch den Anlaßeffekt des Gefüges der Grobkornbereiche werden auch Zugeigenspannungen in Oberflächennähe in Druckeigenspannungen umgewandelt.

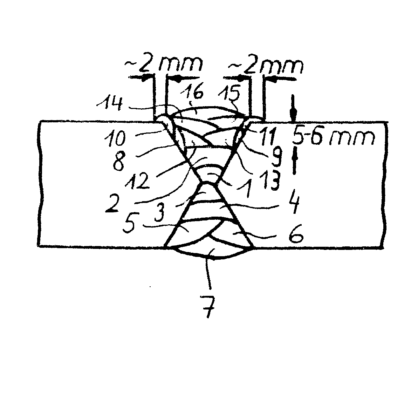

In der Zeichnung ist ein Beispiel für eine Mehrlagenschweißung dargestellt. Danach werden zuerst Wurzellagen 1 und 2 an der Innenseite A eines Behälters B oder dergleichen geschweißt. Anschließend werden an der Behälteraußenseite C Schweißlagen 3—7 aufgebracht. Auf der Behälterinnenseite werden die Nahtkanten auf etwa 100°C vorgewärmt und mit dünnem Strichlagen-Schweißgut gepuffert (Pufferlagen 8 bis 11). Schließlich werden dann die Decklagen 12 bis 16 als Vergütungslagen geschweißt, ohne dabei die Schmelzgrenzen der Pufferlagen zu überschreiten.

Ein Verfahren zum Einlagenschweißen eines Manganstahles gemäß der Erfindung ist gekennzeichnet durch ein Elektro-Schlacke- oder Elektro-Gas-Schweißverfahren unter Verwendung von C—Mn-Zusatzdrahtelektroden ähnlicher chemischer Zusammensetzung wie der Grundwerkstoff bei Schweißspalten ≤16 mm. Hierbei erfolgt das Schweißen vorzugsweise unter reduziertem Wärmeeinbringen von etwa 18.000 J/cm² bei gleichzeitig erhöhter Abkühlgeschwindigkeit des Schweißgutes.

Bei dem Einlagenschweißverfahren genügen somit unlegierte C—Mn-Zusatzdrahtelektroden ähnlicher chemischer Zusammensetzung wie der Grundwerkstoff, da bei Schweißspalten ≤16 mm der Grundwerkstoffanteil in der Schweiße mindestens 50% beträgt. Im Gegensatz zu Mehrlagenschweißungen erfolgt das Einlagenschweißen zweckmäßig unter reduziertem Wärmeeinbringen bei gleichzeitig erhöhter Abkühlgeschwindigkeit des Schweißgutes, da diese Maßnahmen der Kornverfeinung im Schweißgut dienen und in der Wärmeeinwirkungszone einer Kornvergrößerung entgegenwirken. Dabei wird zusätzlich eine günstige Druckeigenspannungsverteilung an der Oberfläche erzielt.

Aus einem erfindungsgemäßen Manganstahl bestehende Bleche können somit im normalgeglühten Zustand, in dem sie gegen ISRK beständig sind, angeliefert und — ggf. auf der Baustelle selbst — nach einem der vorstehend erläuterten Verfahren verschweißt werden.

Tabelle 1

| Stahl-sorte | %C | %Si | %Mn | %P | %S | %Al | %N | %Ni | %Cu | %Cr | %Nb | %Ti |
|---|---|---|---|---|---|---|---|---|---|---|---|---|
| A | 0,06 | 1,77 | 0,30 | 0,135 | 0,014 | 0,630 | 0,059 | 0,02 | 0,17 | ≥0,05 | 0,017 | 0,18 |
| B | 0,15 | 0,38 | 1,58 | 0,023 | 0,018 | 0,155 | 0,0055 | 0,03 | 0,15 | ≥0,05 | ≤0,01 | 0,04 |
| C | 0,15 | 0,30 | 1,52 | 0,024 | 0,016 | 0,120 | 0,0055 | 0,02 | 0,19 | 0,02 | 0,04 | — |
| D | 0,10 | 0,39 | 1,55 | 0,021 | 0,015 | 0,180 | 0,0067 | 0,90 | 0,18 | 0,02 | 0,06 | — |
| E | 0,07 | 0,32 | 1,42 | 0,017 | 0,005 | 0,062 | 0,0076 | 0,05 | 0,04/0,05 | 0,02 | 0,05 | — |
| F | 0,06 | 0,27 | 1,44 | 0,016 | 0,003 | 0,038 | 0,0095 | 0,05 | 0,04 | 0,01 | 0,04 | — |
| G | 0,16 | 0,46 | 1,42 | 0,017 | 0,003 | 0,54 | 0,0068 | 0,03 | 0,03 | 0,60 | 0,020 | — |
| H | 0,14 | 0,44 | 1,47 | 0,016 | 0,003 | 0,42 | 0,0095 | 0,03 | 0,03 | 0,58 | 0,015 | — |

Tabelle 2

| Stahl-sorte | Dicke in mm | Streckgrenze $R_p$ 0,2 N/mm | | Zugfestigkeit $R_m$ N/mm$^2$ | | Bruchdehnung $\delta_5$ % | | Bruch-einschnürung Z % | | CVN-$o_k$-Wert in J/cm bei ±0° C | | −20° C | | Wasserstoff-gehalt nach 96 Std. Belastung | | Wasser-stoff-induzierte Risse | Inter-kristalliner Angriff bei Prüfung nach DIN 50 915 |
|---|---|---|---|---|---|---|---|---|---|---|---|---|---|---|---|---|---|
| | | längs | quer | längs | quer | längs | quer | längs | quer | längs | quer | längs | quer | max. | min. | | |
| A | | 349 | 372 | 513 | 554 | 32,8 | 25,0 | 47,5 | 30,2 | 7,5 | 6,5 | 6 | 5 | 1,60 | 1,26 | keine | nein |
| B | | 347 | 404 | 602 | 553 | 27,6 | 27,2 | 68,2 | 63,7 | 136 | 78 | 120 | 62 | 1,64 | 1,27 | keine | nein |
| C | | 393 | 437 | 564 | 562 | 32,0 | 28,6 | 73,8 | 64,8 | 191 | 89 | 184 | 60 | 1,34 | 1,14 | keine | nein |
| D | | 398 | 350 | 603 | 683 | 27,4 | 23,2 | 62,3 | 52,2 | 178 | 86 | 107 | 61 | 1,19 | 1,12 | keine | nein |
| E | 28 | 354 | 349 | 462 | 464 | 34,7 | 34,4 | 83,2 | 81,3 | 366 | 310 | 353 | 285 | 0,14 | 0,12 | keine | nein |
| | 40 | 332 | 337 | 450 | 447 | 35,3 | 32,9 | 82,3 | 81,1 | 376 | 304 | 344 | 258 | 0,15 | 0,10 | keine | nein |
| F | 28 | 351 | 359 | 460 | 462 | 36,7 | 36,4 | 84,2 | 83,3 | 388 | 325 | 357 | 312 | 0,08 | 0,05 | keine | nein |
| | 40 | 333 | 333 | 446 | 447 | 36,5 | 35,3 | 83,7 | 83,2 | 376 | 323 | 358 | 310 | 0,10 | 0,07 | keine | nein |
| G | 40 | 333 | 322 | 546 | 544 | 31,3 | 31,4 | 65,4 | 62,2 | 83 | 57 | 53 | 48 | 0,42 | 0,28 | keine | nein |
| H | 30 | 340 | 343 | 543 | 542 | 26,4 | 24,0 | 63,7 | 60,9 | 116 | 77 | 73 | 60 | 0,45 | 0,25 | keine | nein |

0 005 199

## Patentansprüche

1. Manganstahl in einer Zusammensetzung von

0,06—0,18% Kohlenstoff
0,10—1,80% Silizium
0,30—1,70% Mangan
0,02—0,70% lösliches Aluminium
0,01—0,06% Niob
0,02—0,14% Phosphor
0,008—0,020% Schwefel
0,15% oder höher Kupfergehalt
ggf. 0,03—0,20% Titan
ggf. bis maximal 1,0% Nickel
ggf. 0,05—0,60% Chrom als Legierungselemente
Rest Eisen

im normal geglühten Zustand.

2. Manganstahl in einer Zusammensetzung von

0,06—0,18% Kohlenstoff
0,10—1,80% Silizium
0,30—1,70% Mangan
0,02—0,70% lösliches Aluminium
0,01—0,06% Niob
0,004—0,020% Phosphor
0,002—0,007% Schwefel
0,03—0,05% Kupfergehalt
ggf. 0,03—0,20% Titan
ggf. bis maximal 1,0% Nickel
ggf. 0,05—0,60% Chrom als Legierungselemente
Rest Eisen

im normal geglühten Zustand.

3. Manganstahl nach Anspruch 1 oder 2, gekennzeichnet durch 0,10—0,50% Silizium.

4. Manganstahl nach Anspruch 1, 2 oder 3, gekennzeichnet durch 0,90—1,70% Mangan.

5. Verfahren zum Mehrlagenschweißen eines Manganstahles nach einem der vorhergehenden Ansprüche, dadurch gekennzeichnet, daß als Schweißgut der Werkstoff 13 CrMo 44 angewendet und die Schweißlagenaufbautechnik in folgenden Schritten durchgeführt wird:

a)  Zuerst werden auf der den aggressiven Medien ausgesetzten Innenseite (A) des Bauteiles (B) die Wurzellagen (1, 2) geschweißt;
b)  anschließend werden an der Außenseite (C) des Bauteiles Schweißlagen (3—7) aufgebracht;
c)  die Nahtkanten auf der Innenseite (a) des Bauteiles werden auf etwa 100° C vorgewärmt und mit dünnem Strichlagen-Schweißgut gepuffert (8—11);
d)  darauf werden auf der Innenseite (A) die Decklagen (12—16) so aufgebracht, daß die Schmelzgrenzen der Pufferlagen (8—11) nicht überschritten werden.

6. Verfahren zum Einlagenschweißen eines Manganstahles nach einem der Ansprüche 1 bis 4, gekennzeichnet durch ein Elektro-Schlacke- oder Elektro-Gas-Schweißverfahren unter Verwendung von C—Mn-Zusatzdrahtelektroden ähnlicher chemischer Zusammensetzung wie der Grundwerkstoff bei Schweißspalten ≤ 16 mm.

7. Verfahren nach Anspruch 6, gekennzeichnet durch ein Schweißen unter reduziertem Wärmeeinbringen von etwa 18.000 J/cm$^2$ bei gleichzeitig erhöhter Abkühlgeschwindigkeit des Schweißgutes.

## Claims

1. Manganese steel in a composition of

0.06—0.18% carbon
0.10—1.80% silicon
0.30—1.70% manganese
0.02—0.70% soluble aluminium

0.01 — 0.06% niobium
0.02 — 0.14% phosphor
0.008 — 0.020% sulphur
0.15% or high copper contents
optionally 0.03 — 0.20% titanium
optionally nickel up to 1.0% max.
optionally 0.05 — 0.60% chrome as alloying constituents
remainder iron

in normal annealed condition.

2. Manganese steel in a composition of

0.06 — 0.18% carbon
0.10 — 1.80% silicon
0.30 — 1.70% manganese
0.02 — 0.70% soluble aluminium
0.01 — 0.06% niobium
0.004 — 0.020% phosphor
0.002 — 0.007% sulphur
0.03 — 0.05% copper contents
optionally 0.03 — 0.20% titanium
optionally nickel up to 1% max.
optionally 0.05 — 0.60% chrome as alloying constituents
remainder iron

in normal annealed condition.

3. Manganese steel according to claim 1 or 2, characterised by 0.10 — 0.50% of silicon.

4. Manganese steel according to claim 1, 2 or 3, characterised by 0.90 — 1.70% manganese.

5. Process for multi-layer welding of manganese steel according to one of the preceding claims, characterised in that the material 13 CrMo 44 is used as welding deposit and in that the layering technique for building up the weld is composed of the following steps:

a) Firstly the root layers (1, 2) are welded on the inside (A) of the component (B) exposed to the aggressive media;

b) Subsequently welding layers (3—7) are applied to the outside (C) of the component;

c) The edges of the weld on the inside (a) of the component are pre-heated to approx. 100°C and buffered with thin strip layers of welding deposit (8—11);

d) Next the top layers (12—16) are applied to the inside (A) in such a way that the smelting limits of the buffer layers (8—11) are not exceeded.

6. Process for single-layer welding of manganese steel according to one of Claims 1 to 4, characterised by an electroslag or electrogas welding technique using additional C—Mn wire electrodes with a chemical composition similar to the basic welding material for welding gaps 16 mm.

7. Process according to claim 6, characterised by welding under reduced heat input of approx. 18,000 $J/cm^2$ with a simultaneously increased cooling speed of the welding deposit.

**Revendications**

1. Acier au manganèse présentant la composition suivante:

0,06 — 0,18% de carbone
0,10 — 1,80% de silicium
0,30 — 1,70% de manganèse
0,02 — 0,70% d'aluminium soluble
0,01 — 0,06% de niobium
0,02 — 0,14% de phosphore
0,008 — 0,020% de soufre
0,15% ou davantage de cuivre
le cas échéant 0,03 — 0,20% de titane
le cas échéant 1,0% au maximum de nickel
le cas échéant 0,05 à 0,60% de chrome comme élément d'alliage
le reste étant du fer

à l'état de recuit normal.

2. Acier au manganèse présentant la composition suivante:

0,06—0,18% de carbone
0,10—1,80% de silicium
0,30—1,70% de manganèse
0,02—0,70% d'aluminium soluble
0,01—0,06% de niobium
0,004—0,020% de phosphore
0,002—0,007% de soufre
0,03—0,05% de cuivre
le cas échéant 0,03—0,20% de titane
le cas échéant 1,0% de nickel au maximum
le cas échéant 0,05—0,60% de chrome comme élément d'alliage
le reste étant du fer

à l'état de recuit normal.

3. Acier au manganèse selon l'une quelconque des revendications 1 ou 2, caractérisé en ce qu'il contient 0,10 à 0,50% de silicium.

4. Acier au manganèse selon l'une quelconque des revendications 1, 2 ou 3, caractérisé en ce qu'il contient de 0,90 à 1,70% de manganèse.

5. Procédé de soudage en plusieurs couches d'un acier au manganèse selon l'une quelconque des revendications précédentes, caractérisé en ce qu'on utilise comme matière de soudage, du 13 CrMo 44, et en ce que la technique de réalisation des couches de soudage comporte les étapes suivantes:

a)  on soude d'abord sur le côté intérieur (A) de la pièce (B) exposée aux milieux agressifs les couches de fond (1, 2);
b)  puis on dépose sur le côté extérieur (C) de la pièce les couches de soudage (3 à 7);
c)  on préchauffe les bords de la soudure sur le côté interne (A) de la pièce à 100°C environ et on les tamponne avec de fines couches de matériau de soudage (8 à 11);
d)  on applique par dessus sur le côté interne (A) les couches de couverture (12 à 16) de telle sorte que les limites de fusion des couches tamponnées (8 à 11) ne soient pas dépassées.

6. Procédé de soudage en une seule couche d'un acier au manganèse selon l'une quelconque des revendications 1 à 4, caractérisé en ce qu'on effectue un soudage électrique sous laitier ou un soudage électrique sous gaz en utilisant des électrodes en fils additionnées en C—Mn de composition chimique analogue à celle du matériau de base pour des interstices de soudage inférieurs ou égaux à 16 mm.

7. Procédé selon la revendication 6, caractérisé par un soudage avec apport réduit de chaleur, d'environ 18.000 J/cm² avec simultanément une vitesse de refroidissement augmentée de la matière de soudage.